# FASCICULE DE BREVET EUROPEEN

(11) **EP 4 684 111 B1**
(45) Date de publication et mention de la délivrance du brevet: **30.09.2026**
(21) Numéro de dépôt: 24719597.7
(22) Date de dépôt: 20.03.2024
(51) Int. Cl.: F01D 11/02, F16J 15/44

(54) **ENSEMBLE D'ETANCHEITE POUR TURBOMACHINE**
DICHTUNGSANORDNUNG FÜR EINE TURBOMASCHINE
SEALING ASSEMBLY FOR A TURBOMACHINE

(30) Priorité: 23.03.2023 FR 2302762
(43) Date de publication de la demande: 28.01.2026
(73) Titulaire: SAFRAN AIRCRAFT ENGINES, 75015 Paris (FR)
(72) Inventeur: LEMONNIER, Jérôme, Claude, George, 77550 MOISSY-CRAMAYEL (FR); BOISNAULT, Franck, Davy, 77550 MOISSY-CRAMAYEL (FR); GARIN, Fabrice, Marcel, Noël, 77550 MOISSY-CRAMAYEL (FR); BONNEAU, Damien, 77550 MOISSY-CRAMAYEL (FR); GAUDRY, Florian, Armand, Gabriel, 77550 MOISSY-CRAMAYEL (FR); LESAINE, Jean-Marc, Michel, 77550 MOISSY-CRAMAYEL (FR)
(74) Mandataire: Cabinet Beau de Loménie
(86) Numéro de dépôt international: PCT/FR2024/050330
(87) Numéro de publication internationale: WO 2024/194567

(56) Documents cités:
- US-A1- 2018 347 387
- US-B1- 7 216 871
- US-B2- 10 107 126
- US-B2- 7 320 468

## Description

### Domaine Technique

Le présent exposé concerne des ensembles d'étanchéité pour des turbomachines aéronautiques.

### Technique antérieure

La conception des circuits de ventilation d'une turbomachine aéronautique est délicate et représente une perte potentielle de performance.

En effet, la turbomachine est d'autant plus performante qu'elle fonctionne à haute température. Cependant, les matériaux la constituant nécessitent alors un refroidissement plus important. Le refroidissement est généralement réalisé par prélèvement d'une partie de l'air de la veine d'air froid, ce qui nuit à la performance générale.

En outre, le circuit de refroidissement impose de mettre en œuvre une architecture complexe pour permettre à l'air de refroidissement d'atteindre les aubes à refroidir depuis l'endroit où il est prélevé.

Afin d'assurer que le circuit d'air ne soit pas alimenté par plus d'air de refroidissement que nécessaire, et ne nuise donc pas outre mesure à la performance de la turbomachine, il est généralement disposé des joints à labyrinthes aux endroits de prélèvement d'air.

De tels joints d'étanchéité permettent d'assurer un passage d'air contrôlé aux endroits où ils sont disposés. L'architecture classique des joints à labyrinthe comprend des léchettes disposées face à des éléments abradables qui présentent une structure alvéolaire de type nids d'abeilles.

Ce type de joint d'étanchéité présente néanmoins pour désavantage que l'usure des léchettes par frottement contre les éléments abradables augmente le jeu du joint d'étanchéité à l'échelle de la durée de vie du joint, et permet ainsi un passage d'air plus grand, ce qui conduit in fine à un trop grand prélèvement d'air et donc à une perte de performance de la turbomachine.

Il est parfois proposé des alternatives à de tels joints d'étanchéité à labyrinthes.

Par exemple, il est proposé des joints d'étanchéité auto-adaptatifs parfois dits hydrostatiques dans la littérature.

De tels joints d'étanchéité proposent de former un joint d'étanchéité en disposant une surface principale du joint qui comprend des motifs en regard d'une autre surface, en rotation par rapport la surface principale et séparée de celle-ci par un jeu prédéfini.

Il est entendu que l'étanchéité mise en jeu ici n'est pas une étanchéité stricte au sens où l'air ne pourrait pas passer le joint, mais une étanchéité relative, le but du joint d'étanchéité étant de laisser passer une quantité d'air définie, quantifiée par le jeu prédéfini.

Le joint d'étanchéité est dit auto-adaptatif car la surface comprenant les motifs interagit avec le flux d'air incident de telle sorte que :
- si le jeu diminue, la pression de l'air entre la surface du joint et la surface en regard augmente, de sorte à repousser le joint d'étanchéité et le ramener ainsi au jeu prédéfini ; et
- si le jeu augmente, la pression de l'air entre la surface du joint d'étanchéité et la surface en regard diminue, de sorte qu'un élément de rappel connecté au joint permette de ramener le joint d'étanchéité au jeu prédéfini.
Les documents US10107126B2, US2018/347387A1, US7320468B2 et US7216871B1 divulguent des joints d'étanchéité auto-adaptatifs selon le préambule de la revendication 1.

Il faut toutefois noter que l'utilisation de tels joints d'étanchéité est actuellement limitée par le fait que le contact entre la surface principale du joint d'étanchéité et la surface en regard doit être évité en toute circonstance, et en particulier même en comportement inhabituel, limite ou accidentel.

Le bon fonctionnement de ces joints d'étanchéité est intimement lié aux conditions de pression en amont et en aval du joint d'étanchéité qui génèrent une force sous le joint d'étanchéité auto-adaptatif.

Dans l'architecture classique des turbomachines, ces conditions de pression sont imposées par les conditions de fonctionnement de la turbomachine et ne peuvent en aucun cas être adaptées pour favoriser le fonctionnement des joints d'étanchéité.

Il demeure donc un besoin d'améliorer le fonctionnement des joints d'étanchéité sans avoir à modifier les conditions d'opération de la turbomachine.

### Exposé de l'invention

L'invention vise précisément à répondre à ce besoin.

L'invention concerne ainsi, selon un premier de ses aspects un ensemble d'étanchéité pour turbomachine comprenant un joint d'étanchéité configuré pour assurer un jeu prédéfini entre ledit joint d'étanchéité et une surface externe d'un rotor monté rotatif autour d'un axe A, l'axe A définissant une direction axiale, le joint d'étanchéité s'étendant circonférentiellement autour de l'axe A et la surface externe étant disposée en regard du joint d'étanchéité,
l'ensemble d'étanchéité étant caractérisé en ce qu'il comprend en outre un organe de redressement d'air comprenant au moins une rangée d'aubes qui s'étendent radialement, l'organe de redressement d'air étant situé en amont du joint d'étanchéité, l'organe de redressement d'air étant configuré pour redresser l'air destiné à traverser le joint d'étanchéité.

En d'autres termes, l'organe de redressement permet d'annuler la composante tangentielle de l'air parvenant au joint d'étanchéité.

Il est en effet du mérite des inventeurs d'avoir compris et documenté que la vitesse tangentielle de l'air parvenant au joint d'étanchéité joue un rôle important dans le fonctionnement du joint.

La vitesse tangentielle de l'air parvenant au joint d'étanchéité s'explique par le fait que celui-ci est en contact avec des pièces mobiles en rotation dans la turbomachine. Elle est habituellement considérée comme bénéfique pour des joints d'étanchéité, car elle permet d'en diminuer le jeu à l'équilibre.

Toutefois, les inventeurs ont constaté qu'au prix d'une légère augmentation du jeu à l'équilibre, redresser l'air incident, c'est-à-dire le priver de sa composante de vitesse tangentielle permet de diminuer d'au moins 20% le rapport de pression entre l'amont et l'aval du joint nécessaire au joint pour se mettre en mouvement et revenir à l'équilibre.

La perte due à l'augmentation du jeu à l'équilibre est ainsi largement compensée par l'assurance que le joint revienne plus rapidement à son jeu d'équilibre dans tous les régimes moteur de la turbomachine.

Dans un mode de réalisation, l'axe A peut être l'axe principal d'une turbomachine.

Un tel ensemble permet tout particulièrement de bénéficier des avantages décrits cidessus et notamment de disposer d'un joint d'étanchéité dont le rapport de pression entre l'amont et l'aval du joint d'étanchéité nécessaire pour ramener le joint d'étanchéité à sa position d'équilibre est grandement réduit, comparativement à un joint d'étanchéité ne comprenant pas d'organe de redressement d'air.

Dans un mode de réalisation, le joint d'étanchéité est un joint possédant un mécanisme de rappel basé sur un différentiel de pression entre l'amont et l'aval du joint.

Il est entendu que l'étanchéité mise en jeu ici n'est pas une étanchéité stricte au sens ou l'air ne pourrait pas passer l'ensemble d'étanchéité, mais une étanchéité relative, le but du joint d'étanchéité étant de laisser passer une quantité d'air définie.

L'air pouvant franchir l'ensemble d'étanchéité permet par exemple de prévenir l'apparition de phénomènes de pompage, ou encore de prélever une portion de l'air nécessaire pour le refroidissement, par exemple pour le refroidissement de pièces chaudes.

Comme décrit, les aubes de l'organe de redressement d'air s'étendent radialement, c'est-à-dire que leurs bords d'attaque et leurs bords de fuite s'étendent dans la direction radiale.

Comme décrit, ces aubes, et plus généralement l'organe de redressement d'air, sont configurées pour redresser l'air destiné à traverser le joint d'étanchéité. Il est entendu par cela que le profil des aubes, i.e. leur étendue dans les deux autres dimensions de l'espace, sont choisie de sorte que de l'air incident ayant une composante tangentielle de vitesse non nulle traversant l'organe de redressement d'air en ressorte avec une composante tangentielle de vitesse diminuée.

Dans un mode de réalisation, l'organe de redressement d'air comprend de 10 à 40 aubes fixes (bornes comprises) dont le profil est défini de telle sorte qu'il permette l'annulation de la composante tangentielle de l'air parvenant au joint d'étanchéité.

Ce mode de réalisation permet d'assurer un redressement de l'air qui diminue d'au moins 20% le rapport entre la pression en amont et en aval du joint nécessaire pour ramener le joint à son jeu d'équilibre, comparativement à un joint d'étanchéité seul.

Dans un mode de réalisation, la distance entre l'entrée de l'organe de redressement d'air et le bord amont du joint d'étanchéité peut être comprise entre 10 mm et 20 mm.

Ce mode de réalisation permet d'une part que le redressement de l'air se fasse tout en assurant un écoulement laminaire, et d'autre part en diminuant au maximum les dimensions de l'organe de redressement de minimiser son poids.

L'entrée de l'organe de redressement d'air considérée ici est le premier élément de l'organe de redressement d'air atteint par l'air incident. Dans un mode de réalisation, l'entrée de l'organe de redressement d'air peut être le bord d'attaque des aubes de l'organe de redressement d'air.

Dans un mode de réalisation, la distance entre la sortie de l'organe de redressement d'air et le bord amont du joint d'étanchéité peut être comprise entre 2,0 mm et 5,0 mm.

Ce mode de réalisation permet d'obtenir un encombrement axial limité de l'ensemble de l'invention.

La sortie de l'organe de redressement considérée ici est le dernier élément de l'organe de redressement traversé par l'air incident. Dans un mode de réalisation, la sortie de l'organe de redressement peut être le bord de fuite des aubes de l'organe de redressement d'air.

Dans un mode de réalisation, l'organe de redressement d'air peut comprendre un organe de distanciation lequel permet de calibrer l'écart entre l'organe de redressement d'air et le joint d'étanchéité.

Dans un mode de réalisation, l'organe de distanciation est une excroissance calibrée disposée dans la direction axiale.

Dans un mode de réalisation, l'organe de redressement d'air comprend un organe de distanciation solidaire de l'organe de redressement d'air.

Dans un mode de réalisation, l'ensemble d'étanchéité décrit plus haut est disposé radialement entre la surface externe d'un rotor monté rotatif autour de l'axe A et une partie fixe d'un carter de turbomachine.

Dans un mode de réalisation, la partie fixe d'un carter de turbomachine comprend un renfoncement radial.

Un tel renfoncement radial permet une disposition facilitée du joint d'étanchéité, ce dernier pouvant être disposé simplement en butée contre le renfoncement radial du carter.

Dans un mode de réalisation, l'ensemble d'étanchéité peut être disposé radialement entre une partie fixe d'un carter de turbomachine et la surface externe du rotor monté rotatif autour de l'axe A, et dans lequel le joint d'étanchéité est disposé axialement entre un renfoncement radial de la partie fixe du carter de turbomachine et l'organe de distanciation de l'organe de redressement d'air.

Ce mode de réalisation assure une mise en place simplifiée de l'ensemble d'étanchéité.

Dans un mode de réalisation, le dispositif de redressement d'air peut comprendre un organe de distanciation qui permet une séparation axiale entre la sortie du dispositif de redressement d'air et le joint d'étanchéité.

Dans un tel mode de réalisation, l'organe de distanciation a de préférence une longueur axiale égale à la longueur souhaitée entre l'aval de l'organe de redressement d'air et l'entrée du joint d'étanchéité.

Cela permet une disposition plus aisée de l'organe de redressement d'air, car ce dernier peut alors être disposé en mettant en butée l'organe de distanciation contre le joint d'étanchéité.

Dans un mode de réalisation, le joint d'étanchéité peut être disposé axialement entre un organe de distanciation d'un organe de redressement d'air décrit plus haut, et un renfoncement radial ménagé dans la partie fixe du carter.

Dans un mode de réalisation identique ou différent, le dispositif de redressement d'air peut comprendre une bride de fixation radialement externe qui est montée contre une bride radiale externe de la portion fixe du carter de turbomachine.

Un tel mode de réalisation permet une disposition aisée de l'organe de redressement d'air dans une turbomachine, sa disposition par rapport à la portion fixe du carter étant réalisée en mettant en butée la bride de fixation radialement externe du dispositif de redressement d'air contre la bride de fixation radialement externe de la portion fixe du carter.

Dans un mode de réalisation, l'ensemble d'étanchéité peut être disposé radialement entre une partie fixe d'un carter de turbomachine et une surface externe du rotor monté rotatif autour de l'axe A et dans lequel l'organe de redressement d'air comprend une bride de fixation radialement externe qui est montée contre une bride radiale externe de la portion fixe du carter de turbomachine.

Ce mode de réalisation assure une mise en place simplifiée de l'ensemble d'étanchéité.

Dans un mode de réalisation, la distance entre l'extrémité radialement interne de l'organe de redressement d'air et la surface externe du rotor monté rotatif autour de l'axe A peut être supérieur ou égale à 2,0 mm.

Par exemple, la distance entre l'extrémité radialement interne des aubes de l'organe d'étanchéité et la surface externe du rotor monté rotatif autour de l'axe A est supérieur au jeu prédéfini du joint d'étanchéité.

Ce mode de réalisation assure que les dilatations thermo-mécaniques de la surface externe du rotor ou ses déplacements locaux non axisymétriques soient insuffisants pour que la surface externe du rotor n'entre en contact avec l'organe de redressement d'air.

Dans un mode de réalisation, le jeu prédéfini du joint d'étanchéité peut être compris entre 0,5 mm et 1,0 mm.

Ce jeu est suffisamment petit pour limiter les pertes de rendement de la turbomachine en assurant néanmoins que la fonction du circuit de refroidissement soit assurée. Ce jeu est en outre suffisamment grand pour assurer que la surface externe du rotor n'entre pas en contact avec le joint dans aucun des régimes de vol.

Dans un mode de réalisation, les aubes d'un organe de redressement d'air peuvent avoir une ligne moyenne comprise entre 15 mm et 25 mm.

La ligne moyenne s'entend ici, et dans le reste de la présente description, comme la longueur curviligne de l'aube à mi-épaisseur dans une projection perpendiculaire à la hauteur de l'aube, c'est-à-dire l'extension de cette dernière dans la direction radiale.

Dans un mode de réalisation, l'épaisseur de l'aube peut être en tout point inférieure ou égale à 5,0 mm.

L'épaisseur de l'aube s'entend ici comme sa dimension perpendiculaire à sa hauteur.

De manière équivalente, l'épaisseur de l'aube est définie en un point de l'aube comme le trajet le plus court permettant de passer de l'intrados à l'extrados.

Dans un mode de réalisation, l'épaisseur de l'aube peut varier, de préférence diminuer, lorsque l'on parcourt l'aube d'amont en aval, i.e. du bord d'attaque vers le bord de fuite.

Une telle diminution de l'épaisseur des aubes permet d'augmenter la section de passage pour l'air, et par conséquent d'en réduire la vitesse donc d'en augmenter la pression statique.

Dans un mode de réalisation, toutes les aubes de l'organe de redressement d'air sont identiques.

Dans un mode de réalisation, le rapport entre l'étendue des aubes dans la dimension axiale et la ligne moyenne des aubes est compris entre 0,6 et 0,9.

Dans un mode de réalisation, l'organe de redressement d'air comprend une pluralité d'aubes fixes dont l'angle de sortie est inférieur à 10°, par exemple inférieur à 5° voire compris entre 0° et 2°.

L'angle de sortie d'une aube peut être défini comme l'angle formé par la tangente à la ligne moyenne prise au bord de fuite et l'axe A de la turbomachine.

Un tel angle de sortie permet de diminuer voire d'annuler la composante tangentielle de la vitesse de l'air incident parvenant au joint d'étanchéité.

Dans un mode de réalisation, l'écart entre deux aubes de l'organe de redressement d'air circonférentiellement adjacente peut être compris inférieur à 40° par exemple compris entre 9° et 36°.

L'écart entre deux aubes est mesuré comme l'angle formé entre deux aubes circonférentiellement adjacente mesuré dans un plan perpendiculaire à la direction A.

Plus l'écart entre deux aubes est petit et meilleure sera la diminution de la vitesse tangentielle de l'air traversant l'organe de redressement d'air.

Dans un mode de réalisation, l'angle d'attaque des aubes de l'organe de redressement d'air peut être compris entre 30° et 75°.

L'angle d'attaque caractérise l'angle formé entre la tangente à la ligne moyenne de l'aube prise au bord d'attaque et la direction de l'axe A.

Un angle d'attaque conforme à celui proposé est optimisé pour les composantes de vitesses tangentielles attendues pour de l'air sortant d'un compresseur haute pression et permet ainsi de maximiser la conversion de la composante tangentielle de la vitesse du flux d'air en composante axiale, tout en minimisant les pertes de charge.

Dans un mode de réalisation, l'organe de redressement d'air peut être solidaire de la même paroi du moteur que la partie mobile du joint d'étanchéité.

Dans un mode de réalisation, le joint d'étanchéité peut comprendre une pluralité de secteurs de joints répartis circonférentiellement autour de l'axe A, chaque secteur de joint comprenant un secteur d'anneau interne relié à un secteur d'anneau externe par un organe de rappel,
le joint d'étanchéité étant tel que la surface interne de chaque secteur d'anneau interne comprend au moins une rangée de motifs creusés à partir de la surface interne des secteurs d'anneau interne, chacun des motifs ayant une forme longiligne s'étendant selon une direction oblique par rapport à la direction axiale et étant séparé d'un autre motif par une portion non creusée de la surface interne.

Une telle architecture du joint diffère radicalement d'un joint à labyrinthe et assure un comportement auto-adaptatif du joint d'étanchéité.

La « répartition circonférentielle » des secteurs de joint d'étanchéité entend signifier que chaque secteur de joint d'étanchéité définit une portion de la circonférence du joint, et que l'ensemble des secteurs de joint d'étanchéité permet d'obtenir le joint d'étanchéité complet.

Il est entendu que le jeu prédéfini est un jeu « cible », et qu'il est possible que le jeu varie légèrement autour de la valeur de jeu prédéfini dans des conditions d'utilisation du joint d'étanchéité. Lorsque le joint d'étanchéité est dans sa position d'équilibre, le jeu prédéfini permet d'assurer que le flux d'air traversant le joint soit le flux d'air souhaité. Toutefois, si le jeu augmente ou diminue, l'ensemble du joint d'étanchéité sera ramené au jeu prédéfini par le comportement de ressort des secteurs d'anneau internes assuré par les organes de rappel ou par la surpression qui apparait alors sous la surface interne du joint d'étanchéité.

Selon un autre de ses aspects, l'invention concerne une turbomachine aéronautique comprenant au moins un ensemble d'étanchéité tel que décrit plus haut.

Dans un mode de réalisation, dans une telle turbomachine aéronautique le au moins un ensemble d'étanchéité peut être disposé sur le circuit d'acheminement de l'air de refroidissement, ledit circuit d'acheminement de l'air de refroidissement comprenant une entrée prélevant l'air en aval du dernier disque du compresseur haute pression et une entrée prélevant l'air radialement sous la chambre de combustion sous la forme d'une embouchure d'air débouchant dans un logement d'admission d'air en communication avec le circuit de refroidissement interne et choisi parmi :
- le premier ensemble d'étanchéité en aval du compresseur à haute pression traversé par l'air prélevé en aval du dernier disque du compresseur haute pression ;
- l'ensemble d'étanchéité interne amont définissant l'entrée dudit logement d'admission d'air et disposé radialement en dessous de l'embouchure d'admission d'air ;
- l'ensemble d'étanchéité extérieur amont définissant la sortie dudit logement d'admission d'air et disposé radialement sous le distributeur haute pression.

En effet, de tels ensembles d'étanchéité sont habituellement des joints d'étanchéité à labyrinthes et leur remplacement par un ensemble d'étanchéité selon l'invention permet d'obtenir des ensembles d'étanchéité dont la durée de vie est augmentée, sans concession sur leurs performances.

### Brève description des dessins

[Fig. 1] La figure 1 représente schématiquement un turboréacteur à double flux.
[Fig. 2] La figure 2 représente schématique un chemin de refroidissement dans une turbomachine.
[Fig. 3] La figure 3 représente schématiquement un ensemble d'étanchéité d'un mode de réalisation particulier vu dans un plan perpendiculaire à la direction circonférentielle.
[Fig. 4] La figure 4 représente schématiquement un ensemble d'étanchéité d'un mode de réalisation particulier dans une vue différente de celle de la figure 3.
[Fig. 5] La figure 5 représente schématiquement un ensemble d'étanchéité d'un mode de réalisation particulier vu dans un plan perpendiculaire à la direction radiale.

### Description des modes de réalisation

L'invention est à présent décrite au moyen de figures, présentes à but descriptif pour illustrer certains modes de réalisation de l'invention et qui ne doivent pas être interprétées comme limitant cette dernière.

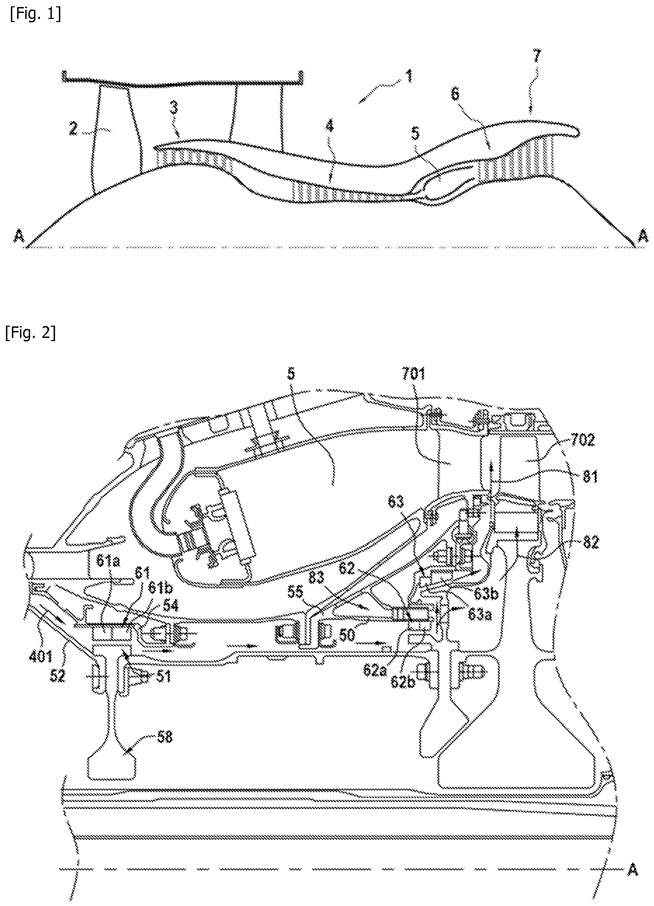

La figure 1 représente, en coupe selon un plan vertical passant par son axe principal A, un turboréacteur à double flux 1. Il comporte d'amont en aval selon la circulation du flux d'air, une soufflante 2, un compresseur basse pression 3, un compresseur haute pression 4, une chambre de combustion 5, une turbine haute pression 6, et une turbine basse pression 7.

Dans la présente demande, les termes relatifs de positionnement par exemple « amont », « aval », « interne » et « externe » seront entendus par rapport à l'axe horizontal A du carter définissant la direction axiale, parcouru dans le sens d'écoulement des flux d'air principaux et secondaire de la turbomachine.

Ainsi, un élément dit « amont » sera traversé avant un élément dit « aval » et un élément dit « interne » sera plus proche de l'axe A qu'un élément « externe ».

La figure 2 représente une portion de la turbomachine visible sur la figure 1, et illustre que cette dernière peut être munie de joints d'étanchéité conformes à ceux décrits plus haut.

**Dans** le mode de réalisation représenté, la portion de turbomachine présente trois ensembles d'étanchéité : un ensemble d'étanchéité intérieur amont 62 (« FIS »), un ensemble d'étanchéité extérieur amont 63 (« FOS ») et un ensemble d'étanchéité en aval du compresseur à haute pression 61 (« CDP »).

De tels ensembles d'étanchéité sont maintenant décrits en lien avec la figure 2 qui n'est qu'un exemple de configuration pour un chemin de refroidissement de l'air dans une turbomachine. L'homme du métier parviendra à identifier un ensemble d'étanchéité extérieur amont 63 (« FOS ») un ensemble d'étanchéité interne amont 62 (« FIS ») et un ensemble d'étanchéité en aval d'un compresseur à haute pression 61 (« CDP ») dans d'autres géométries du circuit de refroidissement.

Dans le mode de réalisation représenté sur la figure 2, de l'air est prélevé en aval du dernier disque de compresseur 401 ainsi que radialement sous la chambre de combustion 5.

L'air prélevé en aval du dernier disque de compresseur 401 traverse en premier l'ensemble d'étanchéité 61, lequel est situé radialement sous l'entrée de la chambre de combustion 5.

L'ensemble d'étanchéité comprend un organe de redressement 61a et un joint d'étanchéité 61b, conforme à ce qui a été décrit plus haut.

Le joint d'étanchéité 61b définit la quantité d'air pour le circuit de refroidissement 401 prélevé en aval du dernier disque du compresseur haute pression 4 et permet en outre d'éviter l'apparition de phénomènes de pompage.

L'air 83 prélevé radialement sous de la chambre de combustion 5 peut par exemple être prélevé par une embouchure d'air 50, débouchant dans un logement compris entre l'ensemble d'étanchéité extérieur amont 63 et l'ensemble d'étanchéité interne amont 62.

Sur la figure 2, ces deux ensembles d'étanchéité délimitent respectivement l'entrée et la sortie d'un tel logement.

L'ensemble d'étanchéité 62 est traversé par l'air prélevé en aval du dernier disque de compresseur 401 souhaitant entrer dans ce logement, indépendamment de s'il sert ensuite au circuit de refroidissement 82 ou qu'il soit destiné au circuit de purge 81.

L'ensemble d'étanchéité 63 délimite la sortie du logement d'admission d'air, et limite le flux d'air rejoignant le circuit de purge 81.

Par exemple, l'ensemble d'étanchéité 62 peut être localisé radialement sous l'embouchure d'admission d'air, tandis que l'ensemble d'étanchéité 63 peut être localisé radialement sous le premier distributeur de la turbine haute pression 701.

Sur la figure 2, le circuit de purge 81 débouche entre le distributeur haute pression 701 et la première aube de rotor haute pression 702.

Dans le mode de réalisation représenté, on notera que la surface en regard des joints d'étanchéité 62b et 63b est une surface externe d'un étage du rotor de la turbine haute pression.

La figure 2 montre une turbomachine pour laquelle les trois ensembles d'étanchéité particuliers 61, 62, 63 sont tels que décrits plus haut mais on ne sort pas du cadre de l'invention si seul l'un de ces ensembles d'étanchéité est conforme à ce qui est décrit plus haut.

Dans la suite, l'ensemble d'étanchéité 61 sera décrit, mais il convient de noter que ce qui est décrit pour cet ensemble peut également être appliqué aux autres ensembles d'étanchéité.

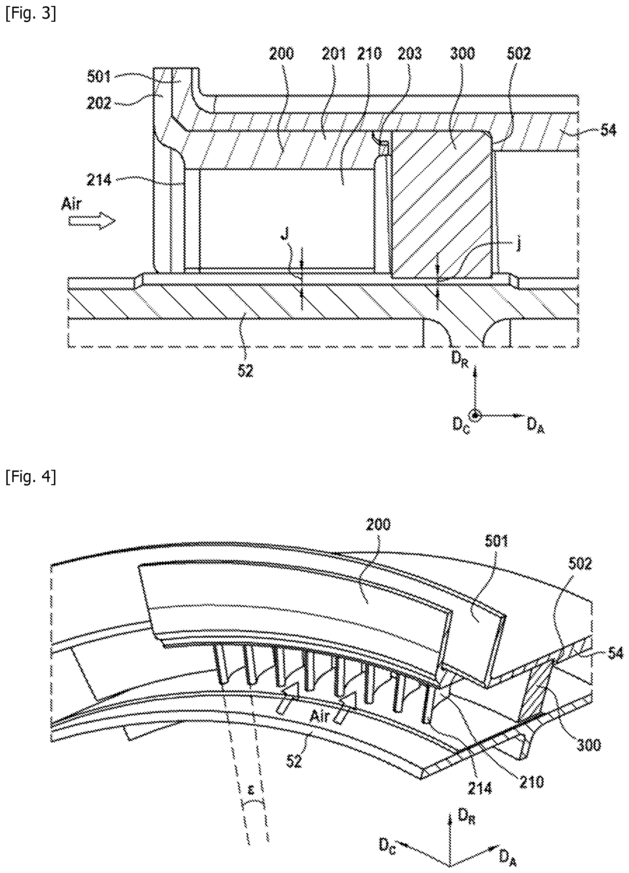

Les figures 3 et 4 représentent dans deux vues différentes un ensemble d'étanchéité tel que décrit.

La figure 3 montre une vue dans un plan perpendiculaire à la direction circonférentielle, tandis que la figure 4 présente un point selon un autre point de perspective.

Dans la présente demande, il est entendu que la direction axiale D_{A} s'entend comme la direction de l'axe principale A de la turbomachine ; la direction circonférentielle D_{C} est celle formant un cercle autour de la direction axiale D_{A} ; et la direction radiale D_{R} définit un rayon du cercle formé par la direction circonférentielle D_{C} et ayant pour centre la direction axiale D_{A}.

Ces directions sont figurées pour les figures 3 et 4.

La figure 3 montre l'agencement entre eux de l'organe de redressement 200 et du joint d'étanchéité 300 d'un organe d'étanchéité 61, 62, 63.

L'organe de redressement 200 comprend dans le mode de réalisation représenté une pluralité d'aubes 210 présentant un profil particulier.

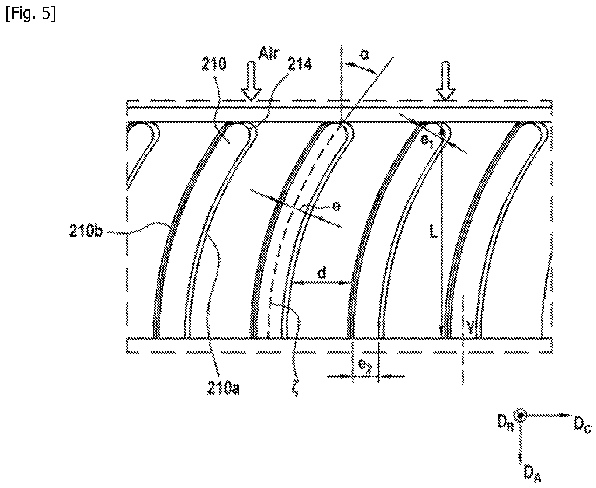

Le profil de ces aubes, dans le mode de réalisation représenté sera d'ailleurs décrit ci-après en lien avec la figure 5.

La figure 3 illustre que l'ensemble d'étanchéité est compris entre une partie fixe 54 du carter de la turbomachine, par exemple solidaire de la chambre de combustion 5, et une partie mobile 52.

Par exemple, la partie mobile 52 peut être une virole de rotor de turbomachine.

De manière alternative et ainsi que cela était représenté sur la figure 2, la partie mobile peut être une surface 51 d'une virole directement reliée à une masselotte 58.

De manière alternative, par exemple si l'ensemble d'étanchéité occupe une position différente dans le circuit de refroidissement, la partie fixe peut être une partie 55 solidaire de la chambre de combustion 5 et disposée radialement sous cette dernière.

Le joint d'étanchéité 300 des figures 3 et 4 est représenté de manière schématique. On voit toutefois que ce dernier définit un jeu d'ouverture j entre la portion interne du joint et la surface mobile 52 en regard de ce dernier.

Dans le mode de réalisation représenté l'ensemble comprend également un organe de distanciation 203. Ce dernier est solidaire de l'organe de redressement 200.

Ce mode de réalisation assure un montage simplifié de l'ensemble d'étanchéité car il suffit de mettre en contact le joint 300 avec l'organe de distanciation 203 pour s'assurer que l'organe de redressement 200, solidaire de l'organe de distanciation 203, soit alors à la distance souhaité du joint 300.

Dans le mode de réalisation représenté, les aubes de l'organe de redressement ont un bord d'attaque 214 qui présente une orientation particulière vis-à-vis du flux d'air entrant.

De préférence, l'angle d'attaque a, c'est-à-dire l'orientation formée par le bord d'attaque de l'aube est choisie en fonction de la vitesse tangentielle attendue du flux d'air incident pour que l'organe de redressement travaille au mieux à en supprimer la composante tangentielle.

Sur le mode de réalisation de la figure 3, on peut également observer le jeu J entre l'extrémité radialement interne des aubes 210 de l'organe de redressement 200 et la surface du rotor monté rotatif autour de l'axe A.

De préférence le jeu J est supérieur, par exemple au moins deux fois supérieur au jeu j du joint d'étanchéité 300.

Dans un mode de réalisation, le jeu j du joint d'étanchéité peut être compris entre 0,1 et 1,0 mm, voire entre 0,5 mm et 1,0 mm.

Dans un mode de réalisation, d'ailleurs représenté sur la figure 3, la partie fixe 54 du carter à laquelle est attachée l'ensemble d'étanchéité comprend une butée 502 contre laquelle repose le joint d'étanchéité 300. Ce mode de réalisation assure une disposition simplifiée du joint, qui peut alors être positionné précisément sur la partie fixe 54 du carter.

Dans un mode de réalisation, d'ailleurs représenté sur la figure 3, l'organe de redressement 200 présente une bride de fixation radialement externe 202, laquelle est disposée en butée contre une partie adaptée de la partie fixe 54 du carter, par exemple une bride radialement externe 501.

Ce mode de réalisation permet d'assurer un positionnement aisé de l'organe de redressement d'air 200, dans la mesure où son positionnement est alors contraint par la bride de fixation radialement externe 202.

Dans un mode de réalisation, qui est celui représenté sur la figure 3, le joint d'étanchéité 300 peut être disposé axialement entre un organe de distanciation 203 d'un organe de redressement d'air 200 décrit plus haut, et un renfoncement radial 502 ménagé dans la partie fixe 54 du carter.

Dans un mode de réalisation, qui est celui représenté sur la figure 3, l'ensemble d'étanchéité peut être disposé radialement entre une partie fixe d'un carter de turbomachine 54 et une surface externe 52 du rotor monté rotatif autour de l'axe A. En outre, l'organe de redressement d'air 200 peut comprendre une bride de fixation radialement externe 202 qui est disposée contre une bride radiale externe 501 de la portion fixe du carter de turbomachine

Ce mode de réalisation assure que les distances souhaitées pour le bon fonctionnement de l'ensemble d'étanchéité soient respectées par un montage mécanique simplifié notamment pour ce qui concerne le positionnement des différents éléments.

En effet, l'ensemble d'étanchéité peut alors être formé en plaçant le joint d'étanchéité 300 en butée contre le renfoncement radial 502, puis en plaçant l'organe de redressement d'air 200 de sorte que l'organe de distanciation 203 soit en butée contre le joint d'étanchéité 300.

En outre, la bride radialement de fixation radialement externe 202 de l'organe de redressement d'air 200 est elle aussi en butée contre la bride radiale externe 501 de la partie fixe 54 du carter, ce qui assure une redondance du contrôle de position de l'organe de redressement d'air 200.

Dans un tel mode de réalisation, aucune mesure du positionnement d'un élément de l'ensemble ne doit être réalisée pour que les éléments 200, 300 de l'ensemble d'étanchéité soient disposés de manière fonctionnelle.

En outre, il est précisé que la figure 4 est une coupe schématique dans laquelle l'organe de redressement n'est pas représenté dans son intégralité.

Dans un mode de réalisation, l'organe de redressement comprend une pluralité de secteurs d'organes de redressement, et éventuellement des moyens de liaisons adaptés entre deux organes de redressement successifs, de sorte que l'ensemble des secteurs d'organes de redressement permette de former un organe de redressement circonférentiel.

Ce mode de réalisation permet de simplifier le montage et la bonne tenue de l'organe de redressement en le décomposant en une pluralité de secteurs, chacun de plus petite dimension.

La figure 5 illustre les différentes dimensions des aubes formant dans un mode de réalisation l'organe de redressement.

Dans un mode de réalisation, les aubes d'un organe de redressement d'air peuvent présenter une ligne moyenne ζ comprise entre 15 mm et 25 mm.

Dans un mode de réalisation, l'épaisseur e de l'aube peut être en tout point inférieure ou égale à 5,0 mm.

L'épaisseur de l'aube s'entend ici comme sa dimension perpendiculaire à sa hauteur.

De manière équivalente, l'épaisseur de l'aube est définie en un point de l'aube 210 comme le trajet le plus court permettant de passer de l'intrados 210a à l'extrados 210b.

Dans un mode de réalisation, qui n'est pas celui représenté, les aubes 210 de l'organe de redressement d'air peuvent avoir une épaisseur qui varie entre le bord d'attaque et le bord de fuite.

Par exemple, l'épaisseur e de l'aube peut décroitre strictement entre le bord d'attaque et le bord de fuite de l'aube.

Dans un mode de réalisation, l'épaisseur au bord d'attaque e₁ et l'épaisseur au bord de fuite e₂ peuvent être telles que l'épaisseur au bord de fuite e₂ soit compris entre 50% et 100% de la valeur de l'épaisseur au bord d'attaque e₁.

Une telle variation de l'épaisseur de l'aube e permet de donner un profil qui assure une augmentation de la pression statique de l'air dans l'organe de redressement d'air 200.

Dans un mode de réalisation, toutes les aubes 210 de l'organe de redressement d'air 200 sont identiques.

Dans un mode de réalisation, le rapport entre l'étendue L des aubes 210 dans la dimension axiale et la ligne moyenne ζ des aubes est comprise entre 0,6 et 0,9.

Dans un mode de réalisation, l'écart entre deux aubes 210 de l'organe de redressement d'air 200 peut être compris entre 9° et 36°.

Un angle correspondant à cet écart, repéré ε, est décrit sur la figure 4 qui en permet une meilleure compréhension. L'écart ε est mesuré entre deux aubes 210 circonférentiellement adjacente l'une de l'autre.

Dans un mode de réalisation, l'angle d'attaque a des aubes 210 de l'organe de redressement d'air 200 peut être compris entre 30° et 75°.

L'orientation, le profil et les dimensions des aubes 210 de l'organe de redressement d'air 200 assurent une suppression de la composante de vitesse tangentielle de l'air incident.

Bien qu'égal à 0° dans le mode de réalisation représenté, l'angle de sortie γ est repéré sur la figure 5.

Comme décrit plus haut, l'angle de sortie γ est formé entre la tangente à la ligne moyenne ζ et la direction axiale D_{A}.

Sur la figure 5, l'angle de sortie γ est égal à 0° ce qui est optimal pour supprimer totalement la composante tangentielle de la vitesse du flux d'air incident.

Ces caractéristiques permettent ainsi d'obtenir un excellent asservissement du joint d'étanchéité 300, et cela même avec des pressions en amont et en aval du joint peu différentes.

Le gain en termes de différence de pression nécessaire pour mettre le joint en mouvement comparativement à des joints d'étanchéité pris isolément, c'est-à-dire sans l'organe de redressement d'air est d'au moins 20 %.

Cela assure un comportement plus sûr du joint d'étanchéité, et évite encore davantage que le joint d'étanchéité n'entre en contact avec la partie mobile en face de laquelle il est disposé.

Ces performances en termes de sureté permettent largement de compenser la perte causée par l'augmentation du jeu à l'équilibre j de l'ensemble d'étanchéité.

Le joint d'étanchéité 300 pourvu qu'il ait un comportement auto-adaptatif tel que décrit plus haut n'est pas spécialement limitatif dans l'obtention de l'effet technique de l'invention.

En effet, c'est bien la suppression de la composante tangentielle de l'air incident qui permet de faciliter le retour du joint d'étanchéité 300 à sa position d'équilibre.

Plus précisément, la différence de pression entre la pression en amont du joint d'étanchéité 300 et celle en aval du joint d'étanchéité 300 n'a plus besoin d'être aussi importante que pour des joints d'étanchéité de l'art antérieur afin que le joint se mette en mouvement.

Il est toutefois décrit un joint d'étanchéité 300 convenant particulièrement à l'invention ci-après.

Dans un mode de réalisation, le joint peut être un joint d'étanchéité configuré pour assurer un jeu prédéfini entre ledit joint et une surface externe d'un rotor monté rotatif autour de l'axe A disposée en regard du joint, l'axe A définissant une direction axiale, le joint s'étendant circonférentiellement autour de l'axe A et comprenant une pluralité de secteurs de joints répartis circonférentiellement autour de l'axe A, chaque secteur de joint comprenant un secteur d'anneau interne relié à un secteur d'anneau externe par un organe de rappel,
le joint d'étanchéité étant tel que la surface interne de chaque secteur d'anneau interne comprend au moins une rangée de motifs creusés à partir de la surface interne des secteurs d'anneau interne, chacun des motifs ayant une forme longiligne s'étendant selon une direction oblique par rapport à la direction axiale et étant séparé d'un autre motif par une portion non creusée de la surface interne.

Une telle architecture du joint 300 diffère radicalement d'un joint à labyrinthe.

Cependant la surface interne du secteur d'anneau interne assure bien une étanchéité aérodynamique en assurant un jeu prédéfini avec la surface en regard.

Il est entendu que l'étanchéité mise en jeu ici n'est pas une étanchéité stricte au sens ou l'air ne pourrait pas passer le joint, mais une étanchéité relative, le but du joint d'étanchéité étant de laisser passer une quantité d'air définie.

La « répartition circonférentielle » des secteurs de joint d'étanchéité entend signifier que chaque secteur de joint définit une portion de la circonférence du joint d'étanchéité, et que l'ensemble des secteurs de joint d'étanchéité permet d'obtenir le joint d'étanchéité complet.

Dans un mode de réalisation, la répartition circonférentielle est régulière, et chaque secteur de joint d'étanchéité représente alors une portion égale de la circonférence du joint d'étanchéité.

Si le jeu du joint d'étanchéité devient plus faible que le jeu prédéfini, la pression radialement sous la surface interne des secteurs d'anneau internes augmente et le secteur d'anneau interne se déplace alors de sorte à augmenter le jeu, tandis que si le jeu du joint d'étanchéité devient plus grand que le jeu prédéfini, l'organe de rappel exerce une force plus grande que la pression s'exerçant radialement sous la surface interne des secteurs d'anneau internes, ces derniers revenant alors à leurs positions d'équilibre, c'est-à-dire au jeu prédéfini.

Cet équilibre aérodynamique permet d'éviter à tout moment que la surface interne du secteur d'anneau interne ne vienne en contact de la surface en regard et le joint d'étanchéité diffère en cela des joints à labyrinthe. On s'affranchit ainsi du problème d'usure qui peut être rencontré pour les joints à labyrinthe classiques.

De manière générale, les motifs présents dans l'épaisseur de la surface interne du secteur d'anneau interne permettent d'améliorer le comportement aérodynamique du joint d'étanchéité.

Les motifs creusés à partir de la surface interne du secteur d'anneau interne permettent en outre de modifier le comportement du joint d'étanchéité, notamment en augmentant davantage la pression exercée par l'air sur la surface interne du secteur d'anneau interne lorsque cette dernière se rapproche de la surface en regard.

Cela rend encore plus improbable le contact entre la surface interne du secteur d'anneau interne et la surface radialement en regard diminuant ainsi le risque d'usure du joint.

Les motifs sont dits « creusés à partir de la surface interne du secteur d'anneau interne», car il doit être compris que les motifs forment un relief dans la direction radiale du secteur d'anneau, c'est-à-dire la direction perpendiculaire à l'axe A, et depuis la surface interne du secteur d'anneau interne.

Les motifs ont des formes longilignes, par exemple parallélépipédiques. Il est ainsi entendu que le profil de profondeur de la surface interne du secteur d'anneau interne définissant un motif est identique dans la direction circonférentielle sur une distance donnée que l'on appellera arbitrairement largeur du motif.

La deuxième dimension du motif, dans le plan de la surface interne du secteur d'anneau interne sera appelée arbitrairement longueur.

On ne sort pas du cadre de l'invention si la largeur est plus grande que la longueur mais, par soucis de simplicité, on ne décrira par la suite que des cas dans lesquels un motif est plus long que large.

Les dimensions sont caractérisées de largeur et de longueur par simplicité, mais l'invention n'est pas réduite au cas où les motifs sont rectangulaires et elle concerne bien des motifs longilignes, et plus précisément parallélépipédiques.

Ainsi, et comme décrit, la longueur d'un motif est dans une direction oblique par rapport à la direction axiale.

L'inclinaison quantifiant la caractéristique « oblique » des motifs s'entend comme l'angle définit entre la direction dans laquelle s'étend la longueur d'un motif et la direction axiale.

Un joint d'étanchéité compatible d'un organe de redressement d'air tel qu'il a été décrit est à présent décrit.

Dans un mode de réalisation le joint d'étanchéité peut comprendre une pluralité de secteurs de joint répartis circonférentiellement autour de l'axe A, chaque secteur de joint comprenant un secteur d'anneau interne relié à un secteur d'anneau externe par un organe de rappel, le joint d'étanchéité étant tel que la surface interne de chaque secteur d'anneau interne comprend au moins une rangée de motifs creusés à partir de la surface interne des secteurs d'anneau interne, chacun des motifs ayant une forme longiligne s'étendant selon une direction oblique par rapport à la direction axiale et étant séparé d'un autre motif par une portion non creusée de la surface interne.

Une telle architecture du joint diffère radicalement d'un joint à labyrinthes.

Cependant la surface interne du secteur d'anneau interne assure bien une étanchéité aérodynamique en assurant un jeu prédéfini avec la surface en regard.

Il est entendu que l'étanchéité mise en jeu ici n'est pas une étanchéité stricte au sens ou l'air ne pourrait pas passer le joint, mais une étanchéité relative, le but du joint étant de laisser passer une quantité d'air définie.

La « répartition circonférentielle » des secteurs de joint entend signifier que chaque secteur de joint définit une portion de la circonférence du joint, et que l'ensemble des secteurs de joint permet d'obtenir le joint complet.

Dans un mode de réalisation, la répartition circonférentielle est régulière, et chaque secteur de joint représente alors une portion égale de la circonférence du joint d'étanchéité.

Il est entendu que le jeu prédéfini est un jeu « cible », et qu'il est possible que le jeu varie légèrement autour de la valeur de jeu prédéfini dans des conditions d'utilisation du joint. Lorsque le joint est dans sa position d'équilibre, le jeu prédéfini permet d'assurer que le flux d'air traversant le joint soit le flux d'air souhaité. Toutefois, si le jeu augmente ou diminue, le joint d'étanchéité sera ramené au jeu prédéfini par rapport à un comportement de ressort des secteurs d'anneau internes assuré notamment par les organes de rappel.

Plus précisément, si le jeu du joint devient plus faible que le jeu prédéfini, la pression radialement sous la surface interne des secteurs d'anneau augmente et le secteur d'anneau interne se déplace alors de sorte à augmenter le jeu, tandis que si le jeu du joint devient plus grand que le jeu prédéfini, l'organe de rappel exerce une force plus grande que la pression s'exerçant radialement sous la surface interne des secteurs d'anneau internes, ces derniers revenant alors à leurs positions d'équilibre, c'est-à-dire au jeu prédéfini.

Cet équilibre aérodynamique permet d'éviter à tout moment que la surface interne du secteur d'anneau interne ne vienne en contact de la surface en regard et le joint diffère en cela des joints à labyrinthe. On s'affranchit ainsi du problème d'usure qui peut être rencontré pour les joints à labyrinthe classiques.

De manière générale, les motifs présents dans l'épaisseur de la surface interne du secteur d'anneau interne permettent d'améliorer le comportement aérodynamique du joint d'étanchéité.

Dans un mode de réalisation, le jeu entre la surface interne du secteur d'anneau interne et la surface radialement en regard peut être compris entre 0,1 et 1,0 mm voire entre 0,5 mm et 1,0 mm.

Les motifs creusés à partir de la surface interne du secteur d'anneau interne permettent de modifier le comportement du joint, notamment en augmentant davantage la pression exercée par l'air sur la surface interne du secteur d'anneau interne lorsque cette dernière se rapproche de la surface en regard.

Cela rend encore plus improbable le contact entre la surface interne du secteur d'anneau interne et la surface radialement en regard diminuant ainsi le risque d'usure du joint.

Les motifs sont dits « creusés à partir de la surface interne du secteur d'anneau interne», car il doit être compris que les motifs forment un relief dans la direction radiale du secteur d'anneau, c'est-à-dire la direction perpendiculaire à l'axe A, et depuis la surface interne du secteur d'anneau interne.

Les motifs ont des formes longilignes, par exemple parallélépipédiques. Il est ainsi entendu que le profil de profondeur de la surface interne du secteur d'anneau interne définissant un motif est identique dans la direction circonférentielle sur une distance donnée que l'on appellera arbitrairement largeur du motif.

La deuxième dimension du motif, dans le plan de la surface interne du secteur d'anneau interne sera appelée arbitrairement longueur.

On ne sort pas du cadre de l'invention si la largeur est plus grande que la longueur mais, par soucis de simplicité, on ne décrira par la suite que des cas dans lesquels un motif est plus long que large.

Les dimensions sont caractérisées de largeur et de longueur par simplicité, mais l'invention n'est pas réduite au cas où les motifs sont rectangulaires et elle concerne bien des motifs longilignes, et plus précisément parallélépipédiques.

Ainsi, et comme décrit, la longueur d'un motif est dans une direction oblique par rapport à la direction axiale.

L'inclinaison quantifiant la caractéristique « oblique » des motifs s'entend comme l'angle définit entre la direction dans laquelle s'étend la longueur d'un motif et la direction axiale.

Dans un mode de réalisation, les motifs présentent un angle d'inclinaison par rapport à la direction axiale, cet angle d'inclinaison étant supérieur ou égal à 30°.

L'angle d'inclinaison des motifs permet d'une part d'inscrire plus de motifs ou des motifs de plus grande longueur à la surface d'un secteur d'anneau interne de dimensions données.

Dans un mode de réalisation, l'angle d'inclinaison des motifs est compris entre 30° et 60°, voire comprise entre 30° et 45°.

En effet, cela permet d'assurer en outre que le flux d'air, qui possède éventuellement une vitesse tangentielle du fait de la rotation de plusieurs éléments avec lesquels il est éventuellement en contact, entre dans le motif sans voir une discontinuité trop importante.

De préférence, l'angle d'inclinaison est orienté dans le même sens que la vitesse tangentielle du flux d'air, ou encore dans le sens de rotation de la surface en regard par rapport au secteur d'anneau interne.

La surface en regard du joint est une surface d'un rotor monté rotatif autour de l'axe A, par exemple le rotor d'une turbine haute pression d'une turbomachine aéronautique. Dans un mode de réalisation, les motifs peuvent être inclinés dans la même direction que le sens de rotation du rotor.

Cela assure que l'orientation des motifs soit dans le sens de la vitesse tangentielle de l'air traversant lesdits motifs, ce qui améliore les performances générales du joint d'étanchéité.

La profondeur d'un motif s'entend comme la distance entre la surface interne du secteur d'anneau interne non creusée et la surface du motif, mesurée perpendiculairement à la surface du secteur d'anneau interne, c'est-à-dire selon la direction radiale.

Dans un mode de réalisation, chaque surface interne des secteurs d'anneau interne comprend une pluralité de rangées de motifs dans la direction radiale, formée chacune d'une pluralité de motifs dans la direction circonférentielle.

Par exemple, chaque surface interne des secteurs d'anneau interne comprend une première et une deuxième rangée de motifs chacune des rangées comprenant une pluralité de motifs répartis dans la direction circonférentielle.

Dans un mode de réalisation où le joint comprend deux rangées de motifs, les motifs de la première rangée de motifs et les motifs de la deuxième rangée de motifs présentent une portion plane sur laquelle la profondeur ne varie pas, et l'on considèrera que la profondeur de cette portion plane est la profondeur du motif. Si les motifs ne présentent pas une telle portion plane ou s'ils présentent plus d'une portion plane, on appellera profondeur du motif la profondeur moyenne du motif.

Les modes de réalisation décrits à présents permettent d'assurer un retour plus rapide du joint d'étanchéité à son jeu prédéfini, et donc à sa position d'équilibre.

En outre, ils assurent que la surface interne du secteur d'anneau interne ne rentre pas en contact avec la surface en regard dans les modes de fonctionnement prévus ou même accidentels.

Dans un mode de réalisation où le joint comprend au moins deux rangées de motifs, les motifs de la première rangée de motifs présentent une profondeur supérieure ou égale aux motifs de la deuxième rangée de motifs.

Il est entendu que la première rangée de motifs est la première rangée rencontrée par le flux d'air passant le joint d'étanchéité. Dans le cas où il n'y a qu'une rangée de motifs, la première rangée est la rangée de motifs.

S'il y a deux rangées de motif, la première rangée de motifs pourra aussi être caractérisée de « rangée amont », et la deuxième rangée de motifs de « rangée aval ».

Dans un mode de réalisation, chaque motif de la première rangée de motifs présente une zone aval de motif plane de profondeur constante et non nulle et une zone amont de motif dans laquelle la profondeur varie de façon décroissante en restant supérieure à la profondeur constante de la zone aval de motif.

La zone aval assure le rôle général du motif qui est d'augmenter la pression sur la surface interne du secteur d'anneau interne lorsque le jeu est plus faible que le jeu prédéfini.

Dans un mode de réalisation, la zone amont de chaque motif de la première rangée de motifs peut présenter une forme arrondie, c'est-à-dire convexe.

Dans ce mode de réalisation, la zone amont permet d'assurer une faible perte de pression à l'entrée du joint d'étanchéité. Cela permet ainsi d'améliorer l'efficacité du joint dans son ensemble.

En outre, dans un mode de réalisation où le joint comprend au moins deux rangées de motifs, puisque deux motifs sont séparés par une portion non creusée de la surface interne du secteur d'anneau interne et que la profondeur de la partie aval du motif de la première rangée est non nulle, ce mode de réalisation assure que l'air parcourant le premier motif rencontre une paroi dirigée dans la direction radiale à la fin du premier motif.

Ces parois assurent que l'effort effectué par l'air radialement sous la surface interne du secteur d'anneau interne soit dirigé dans la direction radiale, et cela indépendamment de sa vitesse tangentielle, ce qui augmente les performances du joint d'étanchéité.

Dans un mode de réalisation, la profondeur de la partie aval du motif de la première rangée peut être comprise entre 1,5 fois et 2,5 fois le jeu prédéfini pour le joint d'étanchéité.

Les inventeurs ont en effet constaté que ces valeurs de profondeur assurent une excellente répartition des pressions dans le joint ce qui améliore l'efficacité du joint.

Dans un mode de réalisation où la surface interne de chaque secteur interne comprend au moins deux rangées de motifs, chaque motif de la deuxième rangée de motifs présente une zone aval de motif plane de profondeur constante et non nulle et une zone amont de motif dans laquelle la profondeur du motif varie de façon croissante depuis la surface interne du secteur d'anneau interne en restant inférieure à la profondeur constante de la zone aval de motif.

Ce mode de réalisation permet d'assurer une nouvelle compression de l'air entrant dans le motif, assurant un effort supplémentaire sous le joint, et donc un meilleur asservissement de ce dernier dans son retour à la position d'équilibre.

Dans un mode de réalisation, chaque surface interne des secteurs d'anneaux interne comprend une première et une deuxième rangée de motifs, la première rangée de motifs étant décalées dans la direction circonférentielle vis-à-vis de la deuxième rangée de motifs.

Par exemple, les motifs de la deuxième rangée sont décalés dans la direction circonférentielle par rapport aux motifs de la première rangée d'une distance comprise entre 0,25 fois la largeur d'un motif et 0,75 fois la largeur d'un motif, voire comprise entre 0,45 fois la largeur d'un motif et 0,55 fois la largeur d'un motif.

Ce mode de réalisation permet d'assurer que le flux d'air traversant le joint et ayant une vitesse tangentielle rencontre bien des motifs des deux rangées de motifs au cours de son passage dans le joint d'étanchéité.

Dans un mode de réalisation, la surface interne du secteur d'anneau interne peut également comprendre plus de deux rangées de motifs, par exemple entre deux et cinq rangées de motifs.

Dans un mode de réalisation, la surface interne de chacune de la première et de la deuxième rangée de motifs comprend une pluralité de motifs répartis dans la direction circonférentielle.

Dans un mode de réalisation, une rangée de motifs peut comprendre plus de cinq motifs, par exemple entre 5 et 20 motifs, de préférence entre 7 et 15 motifs, voire entre 9 et 11 motifs.

Dans un mode de réalisation, la surface interne du secteur d'anneau interne peut également comprendre après le dernier motif une surface non creusée de la surface interne du secteur d'anneau interne puis une portion d'augmentation de l'épaisseur entre la surface non creusée et l'extrémité aval du secteur d'anneau interne.

Un tel profil permet de réduire l'hétérogénéité de pression à la sortie du joint d'étanchéité, ce qui réduit le risque d'instabilité vibratoire du joint à cause du sillage de l'air qui le traverse.

Dans un mode de réalisation, les secteurs d'anneau externes forment une virole externe et les secteurs d'anneau internes présentent des extrémités agencées bout-à-bout dans la direction circonférentielle autour de l'axe A.

Dans tel mode de réalisation, les extrémités circonférentielles des secteurs d'anneau interne peuvent présenter un angle d'inclinaison par rapport à la direction circonférentielle compris entre 30° et 90°.

Cette inclinaison des extrémités circonférentielles des secteurs d'anneau interne des secteurs de joints permet d'assurer un déplacement des secteurs d'anneau interne des secteurs de joints les uns par rapport aux autres.

En effet, au cours de l'utilisation, le déplacement radial des secteurs d'anneau interne n'est pas uniforme. Une inclinaison des extrémités des secteurs d'anneau interne permet de réduire le jeu existant entre deux secteurs d'anneau interne, améliorant ainsi l'efficacité du joint.

Dans un mode de réalisation, le joint d'étanchéité comprend entre 8 et 12 secteurs de joint.

Pour des raisons de tenue mécanique, d'encombrement et pour assurer la planéité de la surface des joints d'étanchéité, on préfèrerait avoir le plus de secteurs possible. En revanche, pour des raisons aérodynamiques, il convient d'éviter les fuites, et donc de minimiser le nombre de secteurs de joints. Les inventeurs ont constaté qu'un tel nombre de secteurs de joints était un compromis optimal entre ces deux effets opposés.

Dans un mode de réalisation, les secteurs d'anneau externe d'un joint d'étanchéité peuvent être une pièce unique, par exemple une virole. En d'autres termes, il n'y a pas de séparation physique entre deux secteurs d'anneau externes circonférentiellement successifs.

Dans un mode de réalisation, une telle virole peut être monolithique, c'est-à-dire réalisée en une seule pièce sans raccordement. Dans un tel cas de figure, il sera considéré qu'une portion angulaire de la virole peut être considérée comme un secteur d'anneau externe.

Dans un mode de réalisation, le joint d'étanchéité comprend en outre un organe d'étanchéité secondaire disposé radialement au-dessus du secteur d'anneau interne de sorte à empêcher l'air de traverser axialement le joint au-dessus du secteur d'anneau.

Un tel organe d'étanchéité secondaire permet d'assurer l'étanchéité des éléments du joint situés radialement au-dessus du secteur d'anneau interne. En d'autres termes un tel organe d'étanchéité secondaire assure que le seul chemin permettant à l'air en amont du joint d'étanchéité de le franchir passe radialement entre la surface interne du secteur d'anneau interne et la surface externe en regard du joint.

Un tel organe secondaire est connu en tant que tel de l'homme du métier et peut par exemple être choisi parmi un joint à brosse, un ensemble de languettes, un tuilage.

Les modes de réalisation du joint décrits ci-dessous sont compatibles des modes de réalisation de l'organe de redressement d'air, de sorte que les effets techniques particuliers de certains modes de réalisation peuvent être obtenus conjointement si cela est souhaité.

## Revendications

1. Ensemble d'étanchéité (61, 62, 63) pour turbomachine (1) comprenant un joint d'étanchéité (300, 61b, 62b, 63b) configuré pour assurer un jeu prédéfini (j) entre ledit joint d'étanchéité et une surface externe (51, 52) d'un rotor monté rotatif autour d'un axe A, l'axe A définissant une direction axiale (D_{A}), le joint d'étanchéité s'étendant circonférentiellement autour de l'axe A et la surface externe (51, 52) étant disposée en regard du joint d'étanchéité,
l'ensemble d'étanchéité étant **caractérisé en ce qu'**il comprend en outre un organe de redressement d'air (200) comprenant au moins une rangée d'aubes qui s'étendent radialement, l'organe de redressement d'air étant situé en amont du joint d'étanchéité, l'organe de redressement d'air (200) étant configuré pour redresser l'air destiné à traverser le joint d'étanchéité.

2. Ensemble d'étanchéité (61, 62, 63) selon la revendication 1, dans lequel l'organe de redressement d'air présente des aubes fixes (210) les aubes fixes ayant un angle de sortie (γ) inférieur à 10°.

3. Ensemble d'étanchéité (61, 62, 63) selon la revendication 2, dans lequel les aubes de l'organe de redressement d'air (200) présentent une ligne moyenne (ζ) comprise entre 15 mm et 25 mm.

4. Ensemble d'étanchéité (61, 62, 63) selon la revendication 2 ou 3, dans lequel l'écart (ε) entre deux aubes (210) circonférentiellement adjacentes est inférieur à 40°.

5. Ensemble d'étanchéité (61, 62, 63) selon l'une quelconque des revendications 2 à 4, dans lequel l'angle d'attaque (a) des aubes (210) de l'organe de redressement d'air (200) est compris entre 30° et 75°.

6. Ensemble d'étanchéité (61, 62, 63) selon l'une quelconque des revendications 1 à 5, dans lequel la distance entre l'entrée de l'organe de redressement d'air (200) et le bord amont du joint d'étanchéité est compris entre 10 mm et 20 mm.

7. Ensemble d'étanchéité (61, 62, 63) selon l'une quelconque des revendications 1 à 6, dans lequel la distance entre la sortie de l'organe de redressement d'air (200) et le bord amont du joint d'étanchéité est compris entre 2,0 mm et 5,0 mm.

8. Ensemble d'étanchéité (61, 62, 63) selon l'une quelconque des revendications 1 à 7, dans lequel l'organe de redressement d'air (200) comprend un organe de distanciation (203) solidaire de l'organe de redressement d'air.

9. Ensemble d'étanchéité (61, 62, 63) selon la revendication 8, dans lequel l'ensemble d'étanchéité est disposé radialement entre une partie fixe d'un carter de turbomachine (54) et la surface externe (52) du rotor monté rotatif autour de l'axe A, et dans lequel le joint d'étanchéité est disposé axialement entre un renfoncement radial (502) de la partie fixe du carter de turbomachine et l'organe de distanciation (203) de l'organe de redressement d'air (200).

10. Ensemble d'étanchéité (61, 62, 63) selon l'une quelconque des revendications 1 à 9, dans lequel l'ensemble d'étanchéité est disposé radialement entre une partie fixe d'un carter de turbomachine (54) et une surface externe (51, 52) du rotor monté rotatif autour de l'axe A et dans lequel l'organe de redressement d'air (200) comprend une bride de fixation radialement externe (202) qui est montée contre une bride radiale externe (501) de la portion fixe du carter de turbomachine.

11. Turbomachine aéronautique comprenant au moins un ensemble d'étanchéité (61, 62, 63) selon l'une des revendications 1 à 10.

12. Turbomachine aéronautique selon la revendication 11, dans laquelle le au moins un ensemble d'étanchéité (61, 62, 63) selon l'une quelconque des revendications 1 à 10 est disposé sur un circuit d'acheminement de l'air de refroidissement, ledit circuit d'acheminement de l'air de refroidissement comprenant une entrée prélevant l'air (401) en aval du dernier disque d'un compresseur haute pression (4) et une entrée prélevant l'air (83) radialement sous une chambre de combustion (5) qui prend la forme d'une embouchure d'air débouchant dans un logement d'admission d'air en communication avec le circuit d'acheminement de l'air de refroidissement et l'ensemble d'étanchéité étant choisi parmi :
- un ensemble d'étanchéité amont (61) situé en aval du compresseur à haute pression traversé par l'air (401) prélevé en aval du dernier disque du compresseur haute pression ;
- un ensemble d'étanchéité interne aval (62) définissant l'entrée dudit logement d'admission d'air et disposé radialement sous l'embouchure d'admission d'air ;
- un ensemble d'étanchéité extérieur aval (63) définissant la sortie dudit logement d'admission d'air et disposé radialement sous un distributeur haute pression (701).

## Patentansprüche

1. Dichtungseinheit (61, 62, 63) für eine Turbomaschine (1), umfassend eine Dichtlippe (300, 61b, 62b, 63b), die so konfiguriert ist, dass ein vorgegebener Spalt (j) zwischen der Dichtlippe und einer Außenfläche (51, 52) eines Rotors, der drehbar um eine Achse A gelagert ist, gewährleistet wird, wobei die Achse A eine axiale Richtung (D_{A}) definiert, die Dichtlippe sich umfangsseitig um die Achse A erstreckt und die Außenfläche (51, 52) der Dichtlippe zugewandt angeordnet ist,
wobei die Dichtungseinheit **dadurch gekennzeichnet ist, dass** sie ferner ein Luftrichtorgan (200) umfasst, das mindestens eine Reihe von Schaufeln aufweist, die sich radial erstrecken, wobei das Luftrichtorgan stromaufwärts der Dichtlippe angeordnet ist,
wobei das Luftrichtorgan (200) so konfiguriert ist, dass es die Luft, die die Dichtlippe durchströmen soll, ausrichtet.

2. Dichtungseinheit (61, 62, 63) nach Anspruch 1, wobei das Luftrichtorgan feststehende Schaufeln (210) aufweist, wobei die feststehenden Schaufeln einen Austrittswinkel (γ) von weniger als 10° haben.

3. Dichtungseinheit (61, 62, 63) nach Anspruch 2, wobei die Schaufeln des Luftrichtorgans (200) eine Mittellinie (ζ) mit einer Länge zwischen 15 mm und 25 mm aufweisen.

4. Dichtungseinheit (61, 62, 63) nach Anspruch 2 oder 3, wobei der Abstand (ε) zwischen zwei in Umfangsrichtung benachbarten Schaufeln (210) weniger als 40° beträgt.

5. Dichtungseinheit (61, 62, 63) nach einem der Ansprüche 2 bis 4, wobei der Anstellwinkel (α) der Schaufeln (210) des Luftrichtorgans (200) zwischen 30° und 75° liegt.

6. Dichtungseinheit (61, 62, 63) nach einem der Ansprüche 1 bis 5, wobei der Abstand zwischen dem Einlass des Luftrichtorgans (200) und der Vorderkante der Dichtlippe zwischen 10 mm und 20 mm liegt.

7. Dichtungseinheit (61, 62, 63) nach einem der Ansprüche 1 bis 6, wobei der Abstand zwischen dem Austritt des Luftrichtorgans (200) und der Vorderkante der Dichtlippe zwischen 2,0 mm und 5,0 mm liegt.

8. Dichtungseinheit (61, 62, 63) nach einem der Ansprüche 1 bis 7, wobei das Luftrichtorgan (200) ein Abstandselement (203) umfasst, das mit dem Luftrichtorgan fest verbunden ist.

9. Dichtungseinheit (61, 62, 63) nach Anspruch 8, wobei die Dichtungseinheit radial zwischen einem festen Teil eines Gehäuses der Turbomaschine (54) und der Außenfläche (52) des um die Achse A drehbar gelagerten Rotors angeordnet ist, und wobei die Dichtlippe axial zwischen einer radialen Ausnehmung (502) des festen Teils des Turbomaschinengehäuses und dem Abstandselement (203) des Luftrichtorgans (200) angeordnet ist.

10. Dichtungseinheit (61, 62, 63) nach einem der Ansprüche 1 bis 9, wobei die Dichtungseinheit radial zwischen einem festen Teil eines Turbomaschinengehäuses (54) und einer Außenfläche (51, 52) des um die Achse A drehbar gelagerten Rotors angeordnet ist und wobei das Luftrichtorgan (200) einen radial äußeren Befestigungsflansch (202) aufweist, der gegen einen radialen Außenflansch (501) des festen Teils des Turbomaschinengehäuses angebracht ist.

11. Luftfahrt-Turbomaschine, umfassend mindestens eine Dichtungseinheit (61, 62, 63) nach einem der Ansprüche 1 bis 10.

12. Luftfahrt-Turbomaschine nach Anspruch 11, wobei die mindestens eine Dichtungseinheit (61, 62, 63) nach einem der Ansprüche 1 bis 10 in einem Kühluftzufuhrkreislauf angeordnet ist, wobei der Kühluftzufuhrkreislauf einen Einlass aufweist, der die Luft (401) stromab des letzten Laufrads eines Hochdruckverdichters (4) entnimmt, und einen Einlass, der die Luft (83) radial unterhalb einer Brennkammer (5) entnimmt, die die Form einer Lufteintrittsöffnung aufweist, die in einen Lufteinlassraum mündet, der mit dem Kühluftzufuhrkreislauf in Verbindung steht, wobei die Dichtungseinheit ausgewählt ist aus:
- einer vorderen Dichtungseinheit (61), die stromab des Hochdruckverdichters angeordnet ist und von der Luft (401) durchströmt wird, die stromab des letzten Laufrads des Hochdruckverdichters entnommen wird;
- einer inneren hinteren Dichtungseinheit (62), die den Einlass des Lufteinlassraums definiert und radial unterhalb der Lufteintrittsöffnung angeordnet ist;
- einer äußeren hinteren Dichtungseinheit (63), die den Auslass des Lufteinlassraums definiert und radial unterhalb eines Hochdruckverteilers (701) angeordnet ist.

## Claims

1. A sealing assembly (61, 62, 63) for a turbomachine (1) comprising a sealing gasket (300, 61b, 62b, 63b) configured to ensure a predefined clearance (j) between said sealing gasket and an external surface (51, 52) of a rotor mounted in rotation around an axis A, the axis A defining an axial direction (D_{A}), the sealing gasket extending circumferentially around the axis A and the external surface (51, 52) being arranged facing the sealing gasket,
the sealing assembly being **characterized in that** it further comprises an air straightening member (200) comprising at least one row of blades which extend radially, the air straightening member being located upstream of the sealing gasket, the air straightening member (200) being configured to straighten the air intended to pass through the sealing gasket.

2. The sealing assembly (61, 62, 63) according to claim 1, wherein the air straightening member has fixed blades (210), the fixed blades having an exit angle (γ) less than 10°.

3. The sealing assembly (61, 62, 63) according to claim 2, wherein the blades of the air straightening member (200) have a mean line (ζ) comprised between 15 mm and 25 mm.

4. The sealing assembly (61, 62, 63) according to claim 2 or 3, wherein the gap (ε) between two circumferentially adjacent blades (210) is less than 40°.

5. The sealing assembly (61, 62, 63) according to any one of claims 2 to 4, wherein the angle of attack (α) of the blades (210) of the air straightening member (200) is comprised between 30° and 75°.

6. The sealing assembly (61, 62, 63) according to any one of claims 1 to 5, wherein the distance between the inlet of the air straightening member (200) and the upstream edge of the sealing gasket is comprised between 10 mm and 20 mm.

7. The sealing assembly (61, 62, 63) according to any one of claims 1 to 6, wherein the distance between the exit of the air straightening member (200) and the upstream edge of the sealing gasket is comprised between 2.0 mm and 5.0 mm.

8. The sealing assembly (61, 62, 63) according to any one of claims 1 to 7, wherein the air straightening member (200) comprises a spacer (203) integral with the air straightening member.

9. The sealing assembly (61, 62, 63) according to claim 8, wherein the sealing assembly is arranged radially between a fixed portion of a turbomachine casing (54) and the external surface (52) of the rotor mounted in rotation around the axis A, and wherein the sealing gasket is arranged axially between a radial recess (502) of the fixed portion of the turbomachine casing and the spacer (203) of the air straightening member (200).

10. The sealing assembly (61, 62, 63) according to any one of claims 1 to 9, wherein the sealing assembly is arranged radially between a fixed portion of a turbomachine casing (54) and an external surface (51, 52) of the rotor mounted in rotation around the axis A, and in which the air straightening member (200) comprises an external attachment flange (202) which is mounted against an external radial flange (501) of the fixed portion of the turbomachine casing.

11. An aeronautical turbomachine comprising at least one sealing assembly (61, 62, 63) according to one of claims 1 to 10.

12. The aeronautical turbomachine according to claim 11, wherein the at least one sealing assembly (61, 62, 63) according to any one of claims 1 to 10 is arranged on a cooling-air routing circuit, said cooling-air routing circuit comprising an inlet extracting air (401) downstream of the last disk of a high-pressure compressor (4) and an inlet extracting air (83) radially below a combustion chamber (5) which takes the form of an air orifice leading into an air intake cavity in communication with the cooling-air routing circuit, and the sealing assembly being selected from:
- an upstream sealing assembly (61) located downstream of the high-pressure compression traversed by the air (401) extracted downstream of the last disk of the high-pressure compressor;
- a downstream interior sealing assembly (62) defining the inlet of said air intake cavity and arranged radially below the air inlet orifice;
- a downstream exterior sealing assembly (63) defining the exit of said air intake cavity and arranged radially below a high-pressure guide nozzle (701).
